Europäisches Patentamt

European Patent Office

Office européen des brevets

(11) Veröffentlichungsnummer: **0 495 786 B1**

(12) **EUROPÄISCHE PATENTSCHRIFT**

(45) Veröffentlichungstag der Patentschrift: **07.12.94**

(21) Anmeldenummer: **90912093.3**

(22) Anmeldetag: **23.08.90**

(86) Internationale Anmeldenummer:
**PCT/EP90/01403**

(87) Internationale Veröffentlichungsnummer:
**WO 91/03534 (21.03.91 91/07)**

(51) Int. Cl.⁵: **C10M 169/04**, C10M 173/02, B01D 19/04, //(C10M169/04, 107:34,129:06,129:38), (C10M173/02,129:06,129:38, 145:38,145:28),C10N10:00, C10N30:18,C10N40:08, C10N40:20

(54) **UNIVERSALSCHMIERMITTEL AUF DER BASIS EINER SYNTHESEÖLLÖSUNG.**

(30) Priorität: **01.09.89 DE 3929071**

(43) Veröffentlichungstag der Anmeldung:
**29.07.92 Patentblatt 92/31**

(45) Bekanntmachung des Hinweises auf die Patenterteilung:
**07.12.94 Patentblatt 94/49**

(84) Benannte Vertragsstaaten:
**AT BE CH DE ES FR GB IT LI NL SE**

(56) Entgegenhaltungen:
**EP-A- 0 037 542
US-A- 3 344 075
US-A- 3 492 242
US-A- 3 893 931**

(73) Patentinhaber: **Henkel Kommanditgesellschaft auf Aktien**

**D-40191 Düsseldorf (DE)**

(72) Erfinder: **SCHMID, Karl
Stifterstrasse 10
D-4020 Mettmann (DE)**
Erfinder: **BONGARDT, Frank
Leichlinger strasse 12
D-4000 Düsseldorf 13 (DE)**
Erfinder: **RÖDER, Jürgen
Stralsunderstrasse 4
D-4000 Düsseldorf 13 (DE)**
Erfinder: **Wüst, Reinhold
Jahnstrasse 23
D-4044 Kaarst (DE)**

Rank Xerox (UK) Business Services
(3. 10/3.0 9/3.3.3)

**Beschreibung**

Die Erfindung betrifft ein wasserlösliches, schauminhibierendes Universalschmiermittel, auf Basis einer wäßrigen selbstemulgierenden Lösung, die aus der Abmischung einer ethoxylierten Dimerfettsäure und eines Entschäumers besteht.

Es ist seit längerer Zeit bekannt, daß wasserunlösliche bzw. nicht wassermischbare Öle, wie Mineralöle oder ungesättigte Fette, insbesondere für die Metallbearbeitung, infolge ihrer beschränkten Kühlungseigenschaften nicht unbedingt als Mittel der Wahl anzusehen sind. Vor allem im Zuge deutlich gestiegener Prozeßgeschwindigkeiten und Abtragsleistungen kommt der Abführung der Wärmemengen und damit letztendlich dem wassermischbaren bzw. wasserlöslichen Universalschmierstoff eine immer größere Bedeutung zu. Diese technologische Veränderung seitens der metallverarbeitenden Industrie einerseits, sowie die erheblich veränderte Betrachtungsweise des Arbeits- und Umweltschutzes andererseits, haben unter Absenkung des Mineralölanteils zum Einsatz sogenannter synthetischer Universalschmiermittel auf der Basis von mineralölfreien, wasserlöslichen Bestandteilen geführt. Unter Berücksichtigung der nicht aufzuhaltenden Entwicklungen auf dem Gebiet der Tenside trugen insbesondere die nichtionogenen Tenside zu einem beträchtlichen Fortschritt im Bereich der wassermischbaren bzw. wasserlöslichen Schmiermittel bei. Auf diese Weise haben sich die wassermischbaren Schmierstoffe, insbesondere aber die emulgierenden bzw. wasserlöslichen Schmiermittel auf Basis einer W/O-Emulsion bzw. einer echten Seifenlösung zunehmend durchgesetzt (vgl. hierzu: J. Müller, Tribologie und Schmierungstechnik, Band 35, Seite 128 - 132, 1988).

Aus dem Stand der Technik sind nach den DE-A-36 09 039 und DE-A-36 11 027 bereits Kaltwalzöle mit einem geringen Dimerfettsäure- bzw. Polymerfettsäuregehalt von weniger als 10 Gew.-% bekannt, wobei sich die Dimerfettsäuren vorzugsweise von Monomerfettsäuren mit 16 bis 20 C-Atomen vom Typ Ölsäure, Linolsäure, Gadoleinsäure oder Zoomarsäure ableiten. Bei der Verwendung dieser Dimerfettsäuren in größeren Gewichtsanteilen sollen allerdings unerwünschte "Ölrückstände in bemerkenswerter Weise" auftreten.

In der WO-A-88 05 809 wird über die Verwendung von ethoxylierten bzw. propoxylierten Guerbetalkoholen und ihren Estern als Schmiermittel bei der Bearbeitung von insbesondere Aluminiumbüchsen aus der Getränkeindustrie berichtet. Zur Veresterung werden beispielsweise auch Dimerfettsäuregemische eingesetzt, die sich aus dimerisierten Ölsäure-, Linolsäure-, Elaidinsäure- und Tallölfettsäureanteilen zusammensetzen.

Die Aufgabe der vorliegenden Erfindung war es nunmehr, ein vollkommen neues Konzept für ein wasserlösliches Universalschmiermittel zur Verfügung zu stellen, welches sich aus der Abmischung eines Syntheseöles auf Dimerfettsäurebasis und eines bestimmten Entschäumers zusammensetzt.

Die Kombination einer ethoxylierten Dimerfettsäure und eines Entschäumers auf der Basis von Guerbetalkoholen führte nun überraschenderweise, insbesondere durch die Optimierung des Ethoxylierungsgrades der Dimerfettsäuren und durch die Zugabe eines geeigneten Entschäumers, in Form einer wäßrigen Lösung zu einem Universalschmiermittel mit ausgezeichneter Kühlschmierwirkung bei gleichzeitig nur geringem Schaumauftreten.

Gegenstand der vorliegenden Erfindung ist dementsprechend ein wasserlösliches, schauminhibierendes Universalschmiermittel, auf Basis einer wäßrigen, selbstemulgierenden Lösung eines Syntheseöles und eines Entschäumers, das dadurch gekennzeichnet ist, daß es als Synthesöl 90 bis 99,9 Gew.-% wenigstens einer ethoxylierten Dimerfettsäure zusammen mit 0,1 bis 10 Gew.-% eines Entschäumers, bestehend aus 90 bis 99 Gew.-% wenigstens eines Guerbetalkoholes und aus 1 bis 10 Gew.-% einer Metallseife, enthält.

Als Kern des erfindungsgemäßen Handelns erweist sich hierbei die überraschende Feststellung, daß sich insbesondere Dimerfettsäuren und/oder Dimerfettsäuregemische mit einem Ethoxylierungsgrad (EO-Grad) von wenigstens 10 bis einschließlich 30, vorzugsweise von wenigstens 15 bis 23, als schauminhibierende Universalschmiermittel eignen. Während ein zu hoher EO-Grad wegen der zunehmenden Hydrophilie des Schmiermittels zu verstärkter Schaumbildung führt, tritt bei zu niedrigen EO-Graden die Wasserunlöslichkeit infolge der starken Hydrophobie in den Vordergrund, so daß es zu einer unerwünschten Phasentrennung kommt. Als ethoxylierte Dimerfettsäuren und/oder Dimerfettsäuregemische kommen wenigstens anteilsweise die Dimerisierungsprodukte von gesättigten, einfach und/oder mehrfach ungesättigten $C_{16}$ bis $C_{22}$-Monomerfettsäuren, wie Palmitoleinsäure, Ölsäure, Gadoleinsäure, Erucasäure, Ricinolsäure, Linolsäure, Linolensäure und Arachidonsäure, zum Einsatz. In einer bevorzugten Ausführungsform dieser Erfindung werden insbesondere Ölsäure und Linolsäuremischungen mit einem Ethoxylierungsgrad von wenigstens 15 bis etwa 23, vorzugsweise von etwa 18, eingesetzt.

Zur Regulierung des Schaumverhaltens wird dem Syntheseöl vorzugsweise eine Entschäumerkomponente in einer Menge von wenigstens 1 Gew.-% bis etwa 5 Gew.-%, wobei insbesondere eine Menge von etwa 2 Gew.-%, jeweils bezogen auf das Syntheseöl/Entschäumer-Gemisch, bevorzugt wird. Der Entschäumer besteht erfindungsgemäß aus einem stabilen, klaren Konzentrat eines Guerbetalkoholes als Trägermaterial mit schauminhibierenden Eigenschaften und einer darin gelösten oder dispergierten Metallseife.

Als Trägermaterial haben sich die unter dem Handelsnamen Rilanit der Anmelderin erhältlichen Guerbetalkohole und/oder Guerbetalkoholgemische (zur technischen Synthese von Guerbetalkoholen: H. Machemer, Angew. Chemie, Band 64, Seite 213-220, 1952 sowie G. Dieckelmann u. H. J. Heinz, "The Basics of Industrial Oleochemistry", Seite 145-146, 1988) bewährt. Vorzugsweise werden 2-Hexyldecanol, 2-Octyldecanol, 2-Hexyldodecanol und/oder 2-Octyldodecanol verwendet.

Als Metallseifen finden die Alkali- und/oder Erdalkalisalze von gesättigten, einfach und/oder mehrfach olefinisch ungesättigten Fettsäuren mit 12 bis 24 C-Atomen, insbesondere mit 16 bis 18 C-Atomen Verwendung, wobei erfindungsgemäß, vorzugsweise mit gesättigten Fettsäuren, insbesondere mit Magnesiumstearat gearbeitet wird. Im Sinne der Erfindung wird ein Metallseifenanteil von wenigstens 3 Gew.-% bis etwa 7 Gew.-%, insbesondere von etwa 5 Gew.-%, jeweils bezogen auf das Guerbetalkohol/Metallseifen-Gemisch, bevorzugt.

Die im Rahmen dieser Erfindung beschriebenen Universalschmiermittel lassen sich mit einer homogenen wäßrigen Phase von bis zu 30 °dH abmischen, so daß auch Leitungswasser aus besonders kalkreichen Wasserreservoirs beigemischt werden kann. Die klar bis opak erscheinenden, langzeitstabilen, wäßrigen Syntheseöl/Entschäumerlösungen eignen sich in einer Menge von wenigstens 0,1 Gew.-% bis etwa 10 Gew.-%, vorzugsweise von wenigstens 1 Gew.-% bis etwa 5 Gew.-%, insbesondere durch ihr gutes bis sehr gutes Schmiervermögen und der nur geringfügigen Schaumbildungstendenz als vielseitig einsetzbares Universalschmiermittel.

Mögliche Anwendungsgebiete zeichnen sich beispielsweise in der Boden-, Textil-, Kunststoff- oder Metallbearbeitung ab und hierbei insbesondere als Bohrspül-, Getriebeöl-, Hydraulik- oder vorzugsweise Kühlschmierflüssigkeit, sowie als Additiv oder Hilfsstoff mit Schmierstoffcharakter in einem der genannten Bereiche.

## Beispiele

Die Erfindung wird durch die nachfolgenden Beispiele näher erläutert.

Beispiel 1

Durch die Abmischung der in Tabelle 1 angegebenen Mengen der jeweils eingesetzten Einzelkomponenten wurden die nachfolgenden wäßrigen Universalschmiermittelformulierungen hergestellt.

## Tabelle 1

| Zusammensetzung der Universalschmiermittel | | | | | | |
|---|---|---|---|---|---|---|
| Bestand-teile | Ent-schäumer | Schmier-mittel | Schmiermittelformulierung | | | |
| | | | A | B | C | D |
| (a) Empoli 1022[1] (Fa. Emery) | | 98 % | | | | |
| | | | 5 % | 3 % | 1 % | - |
| (b) Rilanit G 16[2] (Fa. Henkel) | 95 % | | | | | |
| | | 2 % | | | | |
| (c) Mg-stearat | 5 % | | | | | |
| (d) Wasser[3] | | | 95 % | 97 % | 99 % | 100 % |

**Anmerkungen:**

[1] Dimerfettsäureethoxylat bestehend aus einer Ölsäure-Linolsäuremischung mit 18 EO-Gruppen

[2] 2-Hexyldecanol

[3] dest. Wasser

Auf einer Reichert-Waage (Schmierstoff-Messmaschine DE-U-1749247) wurden diese Formulierungen bei einer Belastung von 1,5 kg und einer Laufstrecke von 100 m auf ihre Schmierwirkung untersucht. Nach dreimaliger Versuchswiederholung der jeweiligen Formulierung ergaben sich die in Tabelle 2 dargestellten Abriebflächen.

Tabelle 2

| Schmierwirkung von wäßrigen Dimerfettsäureethoxylat/Entschäumer-Formulierungen | |
|---|---|
| Formulierung[1] | Abriebfläche ($mm^2$) |
| A | 7,2 |
| B | 7,4 |
| C | 10 |
| D | 29,5 |

**Anmerkung:**
[1] Schmiermittelformulierungen A-D aus Tabelle 1

Vergleichsbeispiel 1

Um einen Vergleich mit aus dem Stand der Technik bekannten Schmiermitteln zu ermöglichen, wurden in zu Beispiel 1 analoger Weise wäßrige Lösungen einer ethoxylierten Monomerfettsäure mit 6 EO (ohne Zugabe eines Entschäumers) und wäßrige Lösungen von Rewolub KSM 14 (Fa. Rewo) in 5 %iger (A), 3 %iger (B) und 1 %iger (C) Formulierung hergestellt und in Tabelle 3 mit Hilfe der Reichert-Waage auf ihre Schmierwirkung im Vergleich zu destilliertem Wasser (D) untersucht.

Tabelle 3

| Schmierwirkung von wäßrigen Monomerfettsäureethoxylat (I)- und Rewolub KSM 14 (II) Formulierungen | | |
|---|---|---|
| Formulierung | Abriebfläche ($mm^2$) | |
| | (I) | (II) |
| A | 21,6 | 9,2 |
| B | 21,9 | 9,6 |
| C | 29,5 | 14,2 |
| D | 29,5 | 29,5 |

Unter der berechtigten Annahme, daß der Entschäumer nur einen geringfügigen Anteil zur Schmierwirkung beiträgt, zeigte sich aus Beispiel 1 und Vergleichsbeispiel 1, daß wäßrige Dimerfettsäureethoxylate überraschenderweise selbst bei geringen Dosierungsgraden gegenüber den aus dem Stand der Technik bekannten Schmiermitteln ein wesentlich besseres Schmierverhalten aufweisen.

Beispiel 2

Das Schaumverhalten der erfindungsgemäßen Universalschmiermittel wurde auf eine sehr einfache, aber effiziente Methode ermittelt, die im folgenden näher erläutert werden soll:
50 ml einer 1 %igen wäßrigen Lösung eines beliebigen Schmiermittels (siehe Tabelle 4) wurden in einem 100 ml Meßzylinder mit feiner Skalierung überführt. Der Zylinder wurde mit einem Stopfen fest verschlossen und 36 mal kräftig geschüttelt. Die entstandene Schaumhöhe wurde sofort und nach 2 Minuten Standzeit bestimmt. Aus der Differenz der beiden Volumenwerte ergab sich der sogenannte Schaumzerfall (innerhalb von 2 Minuten).

Tabelle 4

| Schaumverhalten von 1 %igen wäßrigen Schmiermittelformulierungen | | | | |
|---|---|---|---|---|
| Formulierungen | | Schaumhöhe (ml) | | Schaumzerfall (ml) |
| | | sofort | nach 2 min. | |
| E[1] | (a)[4] (b)[5] | 72 70 | 59 60 | 13 10 |
| F[2] | (a) (b) | 75 75 | 72 72 | 3 3 |
| G[3] | (a) (b) | 85 73 | 72 65 | 13 8 |

**Anmerkungen:**

[1] 98 % Empoli 1022 (Fa. Emery) mit 18 EO <u>und</u> 2 % Entschäumer auf Basis von 95 % Rilanit G 18G (Fa. Henkel)[6] und 5 % Magnesiumstearat

[2] Empoli 1022 (Fa. Emery) mit 18 EO <u>ohne</u> Entschäumerzusatz

[3] Rewolub KSM 14 (Fa. Rewo)

[4] Wasserhärte: 5° dH

[5] Wasserhärte: 20° dH

Im Vergleich zu dem aus dem Stand der Technik bekannten Schmiermittel G zeigte das bevorzugte Universalschmiermittel E der Anmelderin insbesondere unter Zugabe des Entschäumers eine geringere anfängliche Schaumhöhe und innerhalb von 2 Minuten einen wenigstens ebenbürtigen Schaumzerfall.

## Patentansprüche

1. Wasserlösliches, schauminhibierendes Universalschmiermittel, auf Basis einer wäßrigen, selbstemulgierenden Lösung eines Syntheseöles und eines Entschäumers, dadurch gekennzeichnet, daß es als Syntheseöl 90 bis 99,9 Gew.-% wenigstens einer ethoxylierten Dimerfettsäure zusammen mit 0,1 bis 10 Gew.-% eines Entschäumers, bestehend aus 90 bis 99 Gew.-% wenigstens eines Guerbetalkoholes und aus 1 bis 10 Gew.-% einer Metallseife, enthält.

2. Universalschmiermittel nach Anspruch 1, dadurch gekennzeichnet, daß die ethoxylierten Dimerfettsäuren sich wenigstens anteilsweise von gesättigten, einfach und/oder mehrfach olefinisch ungesättigten $C_{16}$- bis $C_{22}$-Monomerfettsäuren ableiten.

3. Universalschmiermittel nach Ansprüchen 1 bis 2, dadurch gekennzeichnet, daß die ethoxylierten Dimerfettsäuren und/oder das ethoxylierte Dimerfettsäuregemisch mit einem Ethoxylierungsgrad von wenigstens 10 bis einschließlich 30, vorzugsweise von wenigstens 15 bis einschließlich 23, vorliegen.

4. Universalschmiermittel nach Ansprüchen 1 bis 3, dadurch gekennzeichnet, daß als Guerbetalkohole 2-Hexyldecanol, 2-Octyldecanol, 2-Hexyldodecanol und/oder 2-Octyldodecanol vorliegen.

5. Universalschmiermittel nach Ansprüchen 1 bis 4, dadurch gekennzeichnet, daß als Metallseife wenigstens ein Alkali- und/oder Erdalkalisalz von gesättigten, einfach und/oder mehrfach olefinisch ungesättigten Fettsäuren mit 12 bis 24 C-Atomen, insbesondere mit 16 bis 18 C-Atomen, und vorzugsweise Magnesiumstearat vorliegt.

6. Universalschmiermittel nach Ansprüchen 1 bis 5, dadurch gekennzeichnet, daß der Entschäumer einen Metallseifenanteil von wenigstens 3 Gew.-% bis etwa 7 Gew.-%, vorzugsweise von etwa 5 Gew.-%, jeweils bezogen auf das Metallseifen/Guerbetalkohol-Gemisch, enthält.

**7.** Universalschmiermittel nach Ansprüchen 1 bis 6, dadurch gekennzeichnet, daß die Entschäumerkomponente in einer Menge von wenigstens 1 Gew.-% bis etwa 5 Gew.-% und vorzugsweise von etwa 2 Gew.-%, jeweils bezogen auf das Syntheseöl/Entschäumer-Gemisch, vorliegt.

**8.** Verwendung der Universalschmiermittel nach Ansprüchen 1 bis 7, als homogene, wäßrige Abmischung, in einer Menge von wenigstens 0,1 Gew.-% bis etwa 10 Gew.-%, vorzugsweise von wenigstens 1 Gew.-% bis etwa 5 Gew.-%, jeweils bezogen auf die wäßrige Syntheseöl/Entschäumerlösung, als Bohrspül-, Getriebeöl-, Hydraulik- oder insbesondere Kühlschmierflüssigkeit in der Boden-, Textil-, Kunststoff- oder Metallbearbeitung sowie als Additiv oder Hilfsstoff mit Schmierstoffcharakter in einem der genannten Bereiche.

## Claims

**1.** A water-soluble, foam-inhibiting universal lubricant based on an aqueous self-emulsifying solution of a synthetic oil and a foam inhibitor, characterized in that it contains 90 to 99.9% by weight of at least one ethoxylated dimeric fatty acid as synthetic oil together with 0.1 to 10% by weight of a foam inhibitor consisting of 90 to 99% by weight of at least one Guerbet alcohol and 1 to 10% by weight of a metal soap.

**2.** A universal lubricant as claimed in claim 1, characterized in that the ethoxylated dimeric fatty acids are derived at least partly from saturated, mono- and/or polyolefinically unsaturated $C_{16-22}$ monomeric fatty acids.

**3.** A universal lubricant as claimed in claims 1 and 2, characterized in that the ethoxylated dimeric fatty acids and/or the ethoxylated dimeric fatty acid mixture are present with a degree of ethoxylation of at least 10 up to and including 30 and preferably of at least 15 up to and including 23.

**4.** A universal lubricant as claimed in claims 1 to 3, characterized in that 2-hexyl decanol, 2-octyl decanol, 2-hexyl dodecanol and/or 2-octyl dodecanol are present as the Guerbet alcohols.

**5.** A universal lubricant as claimed in claims 1 to 4, characterized in that at least one alkali metal and/or alkaline earth metal salt of saturated, mono- and/or polyolefinically unsaturated fatty acids containing 12 to 24 carbon atoms and, more particularly, 16 to 18 carbon atoms and, preferably, magnesium stearate is present as the metal soap.

**6.** A universal lubricant as claimed in claims 1 to 5, characterized in that the foam inhibitor has a metal soap content of at least 3% by weight to about 7% by weight and preferably of about 5% by weight, based on the metal soap/Guerbet alcohol mixture.

**7.** A universal lubricant as claimed in claims 1 to 6, characterized in that the foam-inhibiting component is present in a quantity of at least 1% by weight to about 5% by weight and preferably in a quantity of about 2% by weight, based on the synthetic oil/foam inhibitor mixture.

**8.** The use of the universal lubricant claimed in claims 1 to 7 in the form of a homogeneous aqueous mixture in a quantity of at least 0.1% by weight to about 10% by weight and preferably in a quantity of at least 1% by weight to about 5% by weight, based on the aqueous synthetic oil/foam inhibitor solution, as a drilling fluid, transmission oil, hydraulic fluid or, in particular, cooling lubricant in land excavation, textile finishing and the machining of plastics and metals and as a lubricating additive or auxiliary in any of the applications mentioned.

## Revendications

**1.** Lubrifiant universel inhibiteur de mousse, soluble dans l'eau, à base d'une solution aqueuse auto-émulsifiante d'une huile synthétique et d'un agent antimoussant, caractérisé en ce qu'il renferme comme huile synthétique, 90 à 99,9 % en poids d'au moins un acide gras dimère éthoxylé conjointement avec 0,1 à 10 % en poids d'un agent antimoussant, constitué de 90 à 99 % en poids d'au moins un alcool de Guerbet et de 1 à 10 % en poids d'un savon métallique.

**2.** Lubrifiant universel selon la revendication 1, caractérisé en ce que les acides gras dimères éthoxylés dérivent au moins partiellement d'acides gras monomères en $C_{16}$ à $C_{22}$ saturés,ou à mono- ou à poly-insaturation oléfinique.

**3.** Lubrifiant universel selon les revendications 1 à 2, caractérisé en ce que les acides gras dimères éthoxylés et/ou le mélange d'acides gras dimères éthoxylés sont présents avec un degré d'éthoxylation d'au moins 10 à 30 inclus, de préférence d'au moins 15 à 23 inclus.

**4.** Lubrifiant universel selon les revendications 1 à 3, caractérisé en ce sont présents comme alcools de Guerbet, du 2-hexyldécanol, du 2-octyldécanol, du 2-hexyldodécanol et/ou du 2 octyldodécanol.

**5.** Lubrifiant universel selon les revendications 1 à 4, caractérisé en ce sont présents comme savon métallique, au moins un sel de métal alcalin et/ou alcalino-terreux d'acides gras saturés à mono- et/ou à poly-insaturation oléfinique comportant 12 à 24 atomes de C, en particulier comprenant 16 à 18 atomes de C, et de préférence, du stéarate de magnésium.

**6.** Lubrifiant universel selon les revendications 1 à 5, caractérisé en ce que l'agent antimoussant renferme une fraction de savon métallique d'au moins 3 % en poids jusqu'à environ 7 % en poids, de préférence d'environ 5 % en poids, dans chaque cas par rapport au mélange de savons métalliques et d'alcool de Guerbet.

**7.** Lubrifiant universel selon les revendications 1 à 6, caractérisé en ce que le composant agent antimoussant est présent dans une proportion d'au moins 1 % en poids jusqu'à environ 5 % en poids et, de préférence d'environ 2 % en poids, dans chaque cas par rapport au mélange d'huile synthétique et d'agent antimoussant.

**8.** Utilisation des lubrifiants universels selon les revendications 1 à 7, comme fraction de mélange aqueuse, homogène, dans une proportion d'au moins 0,1 % en poids à environ 10 % en poids, de préférence d'au moins 1 % en poids à environ 5 % en poids, dans chaque cas par rapport au mélange de l'huile synthétique aqueuse et de l'agent antimoussant, comme liquide de forage, d'huile à engrenages, ou liquide hydraulique ou, en particulier, comme liquide lubrifiant réfrigérant dans le travail du sol, des textiles, des matières plastiques ou du métal, ainsi que comme additif ou adjuvant à caractère lubrifiant dans l'un des domaines cités.